Europäisches Patentamt

(19) European Patent Office

Office européen des brevets

(11) Publication number: **0 101 324**
**A2**

(12) # EUROPEAN PATENT APPLICATION

(21) Application number: **83304757.4**

(22) Date of filing: **17.08.83**

(51) Int. Cl.³: **C 10 J 3/00**

(30) Priority: **18.08.82 US 409088**

(43) Date of publication of application:
**22.02.84 Bulletin 84/8**

(84) Designated Contracting States:
**DE FR GB IT SE**

(71) Applicant: **Allis-Chalmers Corporation**
**P.O. Box 512**
**Milwaukee, Wisconsin 53201(US)**

(72) Inventor: **Farnia, Khosrow**
**3520 Goetz Drive**
**Brookfield Wisconsin(US)**

(72) Inventor: **Metzger, Mortimer Irwin**
**73-03 187th Street**
**Flushing New York(US)**

(74) Representative: **Grundy, Derek George Ritchie et al,**
**CARPMAELS & RANSFORD 43, Bloomsbury Square**
**London WC1A 2RA(GB)**

(54) Heat recovery from a tar laden gas.

(57) The invention relates to a process for recovering heat from a hot product gas produced in a coal gasification plant where the gas is laden with vaporized hydrocarbonaceous foulants and particulate matter.

The process recovers heat from a flow of raw gas laden with particulates and vaporized tars including low, intermediate and high boiling point tars. A cooling liquid consisting mainly of a condensate of the intermediate boiling point tars is sprayed by nozzle 30 into the gas flow in chamber 16. The initial temperature of the spray is greater than the temperature at which the low boiling point tars condense. As the spray cools the gas, the intermediate and high boiling point tars condense and capture the particulates within the condensate. The condensate is passed to a settling tank 33 and the gas is passed to a heat exchanger 24 for conventional heat recovery. Within the settling tank the condensate of the intermediate boiling point tars separates from the mixture and is passed to a heat exchanger 41 for indirectly heating water to steam and the condensate is cooled to a temperature greater than the temperature at which the low boiling point tars condense and is recirculated via 53 to be sprayed into a flow of raw gas.

The process increases gasifier efficiency by recovery of the heat from the feed end gas without disruptive deposits of tars on heat recovery equipment.

1/1

EP 0 101 324 A2

## HEAT RECOVERY FROM A TAR LADEN GAS

This invention relates to a process for the recovery of heat from a flow of hot gas. More particularly, this invention relates to a process for the recovery of heat from a flow of a hot product gas produced in a coal gasification plant where the gas is laden with vaporized hydrocarbonaceous foulants and minute particulate matter.

Commonly assigned and copending US patent application of P.G. Garside, Serial No. 264 479 filed May 18, 1981, discloses a process for gasifying solid carbonaceous material such as coal. As disclosed, a flow of a hot product gas is produced which is laden with entrained particulate matter and vaporized hydrocarbonaceous foulants such as tar. The hydrocarbonaceous foulants present in a hot product gas such as produced in the aforementioned gasification process include a plurality of foulants having distinct boiling points for the operating pressures at which the gas is produced (e.g. 60 psig). The boiling points of the foulants cover a range of approximately 900°F (482°C) (representing tars) of 350°F (177°C) (representing light oils) with the higher boiling point foulants being generally more viscous than the lower boiling point foulants.

It is known to be economically desirable to recover the sensible heat from a product gas stream as described above. However, conventional processes for heat recovery (such as passing the gas through a conventional surface-type heat recovery boiler) are generally impractical since, as the gas cools, the hydrocarbonaceous foulants condense and clog conventional equipment. This problem of clogging is compounded by the presence of entrained particulate matter which accumulates within the condensed foulants increasing the viscosity of the foulants. While the amount of particulate matter can be greatly reduced by passing the hot product gas through a gas-particle separator (such as a cyclone separator), the most minute particles (e.g. less than 10 microns) commonly are not separated from the gas in conventional gas particle separators.

Prior art processes are known for treating a gas flow to quench the flow and remove the tars and other foulants. An example is U.S. Patent No. 4 252 543 to Giles, dated February 24, 1981. U.S. Patent No. 4 252 543 teaches a process of quenching a fuel gas containing a hydrocarbonaceous foulant which is a mist former when rapidly cooled. The process includes contacting the gas with a mixture of water and a condensate of the hydrocarbonaceous foulant. The contact is maintained for a sufficient time to evaporate the water with the foulant condensing on the remaining droplets of condensate. The recovered condensate is cooled, mixed with water and recycled to quench and clean the gas. In the disclosed process, a substantial portion of the sensible heat of the raw gas flow is utilized in vaporizing the water and, hence, unrecovered.

It is an object of the present invention to provide a process for the recovery of heat from a gas flow laden with a plurality of hydrocarbonaceous foulants of various boiling points.

It is a further object of the present invention to provide a process for the recovery of heat from a gas flow laden with hydrocarbonaceous foulant by quenching the gas to remove higher boiling point foulants to form a condensate and recovering the heat from the condensate.

According to a preferred embodiment of the present invention, a process is disclosed for the recovery of sensible heat from a gas flow laden with a plurality of hydrocarbonaceous foulants. The foulants include high, intermediate and low boiling point foulants. The high boiling point foulants are highly viscous at temperatures where the low boiling point foulants condense.

A condensate of intermediate boiling point foulants is sprayed into the gas flow to contact and cool the gas. The temperature of the condensate when initially sprayed is maintained to be greater than a highest temperature at which the low boiling point foulants condense. The sprayed condensate contacts the gas for a time sufficient to condense the high and intermediate boiling point foulants. The gas, laden with low boiling point foulants, passes to a conventional heat exchanger to recover the sensible heat of the gas and condense the remaining foulants which are of low viscosity.

The hot mixture of condensates of intermediate and high boiling point foulants flows to a settling tank with the high boiling point condensates separating from the intermediate boiling point condensates.

The intermediate boiling point condensates are passed to a conventional heat exchanger for indirectly heating a heat recovery medium. The condensate heats the medium thereby recovering the heat of the condensate. The condensate is cooled to a temperature just greater than the temperature at which the low boiling point foulants condense. The cooled condensate is then used as the spray for initially cooling the gas flow.

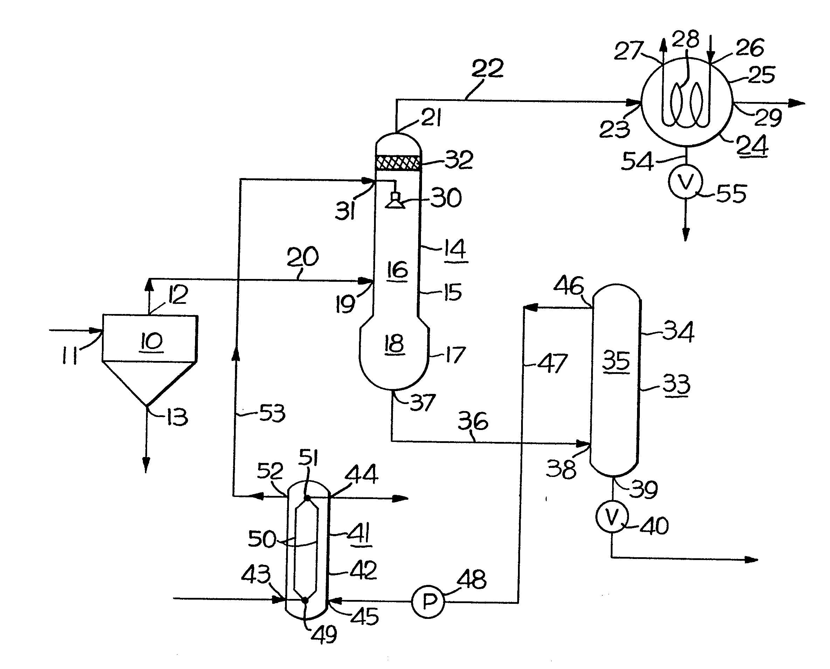

The drawing, consisting of a single figure, is a schematic showing of a system for the recovery of heat from a gas flow.

Referring to the drawing, there is schematically shown a system for the recovery of sensible heat from a flow of a hot product gas as may be produced in a coal gasification process. The system includes a gas-particle separator 10 having a product gas inlet 11, a product gas outlet 12 and a particle outlet 13. Gas-particle separator 10 is a conventional cyclone separator which is highly efficient for removing from a gas stream particulates having a size greater than 10 microns. For a gas flow entering separator 10 through inlet 11 and having entrained particulate matter having sizes ranging from less than 10 microns to greater than 10 microns, gas flow leaving separator 10 through outlet 12 will be substantially free of particulate matter greater than 10 microns but most of the particulates less than 10 microns will remain in the gas flow.

A liquid-gas contactor 14 is provided comprising a hollow cylindrical body member 15 having a vertical cylindrical axis and defining a liquid-gas contacting chamber 16. A sump 17 is provided on the bottom of contactor 14 defining an accumulation chamber 18 in communication with contacting chamber 16. Contactor 14 is provided with a gas inlet 19 in communication with a lower portion of chamber 16 above sump 17. A gas conduit 20 connects gas inlet 19 of contactor 14 with gas outlet 12 of separator 10 in gas flow communication. A gas outlet 21 is provided at the top of contactor 14 in communication with chamber 16..

A second gas conduit 22 connects gas outlet 21 of contactor 14 in gas flow communication with a gas inlet 23 of a first heat exchanger 24. First heat exchanger 24 is a conventional heat exchanger comprising a housing 25 having a fluid inlet 26 and fluid outlet 27 with inlet 26 and outlet 27 connected in fluid flow communication by a heat exchanger coil 28 contained within housing 25. A gas outlet 29 is provided as operable to permit gas to flow from heat exchanger 25 to subsequent apparatus (not shown) for further processing (such as sulfide removal).

A liquid spray nozzle 30 is provided within contacting chamber 16 of liquid-gas contactor 14 and operable to receive a flow of a liquid from an inlet 31 and spray the liquid within chamber 16 toward accumulation chamber 18 against a direction of gas flow from gas inlet

19 to gas outlet 21. A filter 32 is positioned within chamber 16 between nozzle 30 and gas outlet 21.

The system further includes a settling tank 33 comprising a vertically disposed cylindrical body 34 enclosing a settling chamber 35. A conduit 36 connects a fluid outlet 37 at the bottom of sump 17 in fluid flow communication with a fluid inlet 38 at a lower portion of settling tank 33. Liquid-gas contactor 14 and settling tank 33 are respectively positioned to permit a fluid accumulated within accumulation chamber 18 to flow under gravity through conduit 36 to the lower portion of settling chamber 35. A fluid discharge outlet 39 is provided at the bottom of settling tank 33 with a valve 40 operable to permit fluid to discharge from the bottom of settling chamber under gravitational flow to a storage tank (not shown).

The system further includes a second heat exchanger 41 comprising a housing 42 with a fluid inlet 43 and fluid outlet 44.

A distribution manifold 49 within heat exchanger 41 is provided as operable to receive fluid from inlet 43 and distribute the fluid among a plurality of heat exchange tubes of which two are schematically shown at 50. A collection manifold 51 is provided to collect fluid from tubes 50 and pass the collected fluid through fluid outlets 44 of heat exchanger 41.

Heat exchanger 41 is provided with an inlet 45 connected in fluid flow communication with an outlet 46 at an upper portion of settling tank 33 by means of a fluid conduit 47. A pump 48 driven by a motor (not shown) is provided along conduit 47 intermediate settling tank 33 and second heat exchanger 41 for drawing a fluid from the upper portion of settling chamber 35 through outlet 46 and conduit 47 to inlet 45 of heat exchanger 41. A fluid conduit 53 connects an outlet 52 of second heat exchanger 41 in fluid flow communication with the inlet 31 of liquid spray nozzle 30.

In the operation of the system, a flow of a raw product gas is produced in a gasification process such as described in the aforementioned patent application of P.G. Garside. The raw product gas is of an elevated temperature and pressure (for example 1,000°F (538°C) and 60 psig). The gas is ladened with entrained particulate matter and with a plurality of vaporized hydrocarbonaceous foulants having widely varying boiling points for the operating pressures of the system. Included within the plurality of foulants are high boiling point foulants (such as high viscosity tars) which have boiling points covering a range from approximately 900°F (482°C) to 700°F (371°C) intermediate boiling point foulants (such as medium viscosity tars and heavy oils) which boil over ranges from approximately 700°F (371°C) to 400°F (204°C), and low boiling point foulants (such as low viscosity light oils) which boil at temperatures less than 400°F (204°C) for the operating pressures of the system. The high boiling point foulants, when condensed to a liquid state, are highly viscous. The condensates of the high boiling point foulants flow freely at temperatures where the intermediate boiling point foulants begin to condense. However, at temperatures where the low boiling point foulants condense, the condensates of the high boiling point foulants are so viscous as to effectively resist flow through a conduit under urging from a conventional pump such as pump 48.

A preferably continuous flow of the raw hot product gas, as described above, is passed from a gasifier (not shown) to separator 10 through inlet 11. Within separator 10, substantially all of the entrained particulate matter in excess of 10 microns in size are separated from the gas flow and discharged through the particle outlet 13. The gas flows from separator 10 through outlet 12 and conduit 20 to the inlet 19 of the liquid-gas contactor 14. The gas, having entrained particulate matter of size less than 10 microns, flows into the lower portion of contacting chamber 16 and flows upwardly within chamber 16 toward the gas outlet 21.

Concurrent with the flow of product gas within chamber 16, a cooling liquid (comprising a condensate of the intermediate boiling point foulants) is sprayed downwardly into chamber 16 from nozzle 30. The liquid is of a temperature lower than the temperatures at which the high and intermediate boiling point foulants condense yet higher than the temperatures at which the low boiling point foulants condense for the operating pressures of the system.

The cooling liquid spray contacts the gas flow and cools the gas with a resultant increase in the temperature of the spray. The time of the contact between the spray and gas flow (which can be increased by increasing the size of contactor 14) is maintained for a time sufficient to condense essentially all of the high boiling point foulants and substantially all of the intermediate boiling point foulants while heating the cooling liquid without substantial vaporization of the liquid. As the gas cools and the foulants condense, the remaining entrained particulate matter is collected by the condensates. The low boiling point foulants within the gas do not condense substantially.

The gas flow cooled within chamber 16 flows from contactor 14 through outlet 21. Filter 32 prevents condensates which may be entrained within the gas and uncollected particulate matter from flowing with the gas through outlet 21. The gas flows from outlet 21 through conduit 22 with the gas free of substantially all high boiling point foulants, particulate matter and most intermediate boiling point foulants.

The gas is admitted to first heat exchanger 24 through inlet 23 and flows past coil 28 and in contact therewith to outlet 29. A first heat recovery medium, such as a flow of clean product gas, is admitted to coil 28 through inlet 26. The gas flow heats the clean gas within coil 28 preheating the gas prior to its admission to a burner for generating steam or driving a turbine (not shown). As the gas flows past coil 28, it is cooled to a final temperature below the boiling points of the low boiling point foulants. As the gas cools, the low boiling point foulants condense as does any intermediate and high boiling point foulants which may remain in the gas flow. The resulting condensate has as a primary constituent the low viscosity low boiling point foulants such that the mixed condensate is of low viscosity and does not deposit on coil 28. The condensate may be removed from first heat exchanger 24 through any suitable means such as a tap line 54 with a valve 55.

Within contactor 14, the condensates formed from cooling the gas with the coolant spray collect within accumulation chamber 18 of sump 17 as a mixture of condensates of high and intermediate boiling point foulants and particulates. Having been cooled to a temperature not less than the highest temperature at which the low boiling point foulants condense, the condensate mixture is of sufficiently low viscosity to flow from chamber 18 through outlet 37 and line 36 under gravity.

The condensates flow into the lower portion of settling tank 33 through inlet 38. Within settling tank 33, the condensates separate with the high boiling point foulants and particulates, having the highest densities, assuming a layer within a lower portion of chamber 35. The intermediate boiling point foulants, having the lowest densities of the mixture, rise to a layer within the upper portion of chamber 35. The heaviest of the foulants (that is, the tars), together with the particulate, accumulate within the lowest portion of chamber 35 and are removed through outlet 39 by operation of valve 40. The removed mixture may be disposed of or, preferably, returned to the gasifier for gasification. For a gasification process as described in the aforementioned patent application of P.G. Garside, the amount of the heaviest foulants (the tars) which are too viscous to permit heat recovery within a heat exchanger such as 41 (as will be described) and, must be withdrawn through outlet 39, represents approximately 3% of the weight of the untreated gas entering contactor 14.

Pump 48 draws a separated portion of the mixed condensates consisting primarily of low viscosity intermediate boiling point foulants from the upper portion of chamber 35 through outlet 46 and through conduit 47 into inlet 45 of second heat exchanger 41. (As the initiation of operation, the settling tank 33 is filled with heated condensates of intermediate boiling point foulants). The foulant flows through second heat exchanger 41 in contact with outer surfaces of tubes 50 to outlet 52.

A second heat recovery medium, preferably saturated water, is admitted to heat exchanger 41 through inlet 43 and flows to distribution manifold 49. Distribution manifold 49 accepts the flow of the heat recovery medium and distributes it among heat transfer tubes 51. The medium flows through the tubes 50 to collection manifold 51 where the flows are collected and passed from second heat exchanger through outlet 44. The initial temperature of the water entering second heat exchanger 41 through inlet 43 is not less than the lowest temperature at which the intermediate foulants become too viscous to flow through a conduit such as conduit 53.

As the foulant flows through heat exchanger 41 concurrently with a flow of saturated water through heat exchanger tubes 50, the water is heated by the foulant with the water converted to steam which may be used in the gasification plant. The foulant is cooled to a temperature not lower than the temperatures at which the low boiling point foulants condense with the foulant cooled to this temperature being of sufficiently low viscosity to flow through a conduit such as conduit 53.

The cooled foulant leaving heat exchanger 41 through outlet 52 flows through line 53 to the inlet 31 of nozzle 30. The cooled foulant is sprayed into contacting chamber 16 by nozzle 30 as the cooling liquid.

By way of example, in a cool gasification plant such as described in the aforementioned patent application of P.G. Garside, a flow of a tar-laden gas leaving separator 10 with entrained minute particulate matter will be at a temperature of 1,000°F (538°C); a pressure of 60 psig ($413.7 \times 10^3$ Nm$^{-2}$) and at a flow rate of 142,345 lbs/hr (64,567 Kgs/hr). The flow includes low boiling point foulants at a rate of 2300 lbs/hr (1043 Kgs/hr), minute particulate matter of about 480 lbs/hr (218 Kgs/hr) and high and intermediate boiling point foulants of about 2330 lbs/hr (1043 Kgs/hr) with about 50% of that amount being intermediate boiling point foulants.

Intermediate boiling point foulants at a temperature of 450°F (232°C) are sprayed into contacting chamber 16 at a rate of 928,077 lbs/hr (420968 Kgs/hr) and contact the gas flowing upwardly in the chamber. The spray cools the gas to approximately 500°F (260°C) with the gas leaving the contactor containing only low boiling point foulants and flows to first heat exchanger 24. A flow clean product gas is supplied to coil 28 as a cooling medium at a temperature of 105°F (41°C) and is preheated by the gas admitted to the heat exchanger through inlet 23. The clean product gas is preheated to 225°F (107°C) with the raw gas cooled to 371°F (188°C) with at least a portion of the low boiling point foulants condensing within first heat exchanger 24.

The intermediate boiling point foulants sprayed into contacting chamber 16 and the condensates formed in chamber 16 accumulate in sump 17 and flow to settling tank 34. The intermediate boiling point foulants, being of lesser density than the high boiling point foulants and particulates, rise to the upper portion of tank 34 and are drained off by pump 48 to second heat exchanger 42 at a temperature of 500°F (260°C). Saturated water admitted to heat exchanger 42 at a rate of 28,155 lbs/hr (12770 kgs/hr) and a temperature of 366°F (186°C) is heated by the intermediate foulants to generate a flow of steam from outlet 44 at a temperature of 366°F (186°C) and a pressure of 150 psig ($1034 \times 10^3$ Nm$^{-2}$). The intermediate boiling point foulants flowing through second heat exchanger 42 are cooled to 450°F (232°C) and fed to nozzle 30 to be sprayed into chamber 16 to cool gas flowing into chamber 16. At 450°F (232°C), the intermediate boiling point foulants are of sufficiently low viscosity to be forced through conduits by a conventional pump such as pump 48.

Claims:

1.　A process for recovering heat from a hot gas containing a plurality of vaporized hydrocarbonaceous foulants including high boiling point foulants, intermediate boiling point foulants and low boiling point foulants where said high boiling point foulants are highly viscous at temperatures where said low boiling point foulants condense, said process characterized by the steps of:

a)　contacting a flow of said hot gas with a cooling liquid having a temperature which is lower than a lowest temperature at which said high boiling point foulants condense and higher than a highest temperature at which said low boiling point foulants condense;

b)　maintaining said contact for a time sufficient to condense a substantial portion of said high and intermediate boiling point foulants without substantial vaporization of said cooling liquid to form a condensate of intermediate and low boiling point foulants and cooling liquids;

c)　separating from said condensate a portion of said condensate consisting primarily of intermediate boiling point condensate; and

d)　indirectly heating a flow of a heat recovery medium with a flow of said separated portion and cooling said separated portion to a temperature lower than said lowest temperature at which said high boiling point foulants condense and higher than said highest temperature at which said low boiling point foulants condense to recover the sensible heat of said flow of hot gas in two stages by (i) heating said cooling liquid and generating a hot condensate of cooling liquid and condensates of said foulants, and (ii) heating said heat recovery medium with at least a portion of said hot condensate while maintaining said condensate at temperatures sufficiently high preventing said condensates from being highly viscous.

2.    A process according to claim 1, characterised in that said cooling liquid comprises intermediate boiling point foulants.

3.    A process according to claims 1 or 2, characterised in that said cooling liquid includes said cooled separated portion.

4.    A process according to claim 1, 2 or 3 characterised in that said separated portion is separated from said condensate by passing said condensate to a settling tank with said condensates of said high boiling point foulants separating by gravity from condensates of said intermediate boiling point foulants leaving said intermediate boiling point foulants as said separated portion.

5.    A process according to claims 1, 2, 3 or 4 wherein said hot gas is a product gas produced from the gasification of solid carbonaceous material having a temperature of about 1,000°F (538°C) prior to contacting said cooling liquid; and characterised in that said lowest temperature at which said high boiling point foulants condense is about 700°F (371°C); said intermediate boiling point foulants having boiling points over an approximate range of 700°F (371°C) to 400°F (204°C); and said low boiling point foulants having boiling points less than about 400°F (204°C).

6.    A process according to claim 5, characterised in that said product gas is contacted with condensed intermediate boiling point foulants having a temperature of about 450°F (232°C) with said contact maintained for a time sufficient to cool said product gas to about 500°F (260°C) and condense substantially all of said high boiling point foulants and most intermediate boiling point foulants with said condensate having a temperature of about 500°F (260°C).

7.     A process according to claim 6, characterised in that said condensed intermediate boiling point foulants are separated from said condensates of high boiling point foulants with said separated intermediate boiling point foulants indirectly heating a heat recovery medium and cooling said intermediate boiling point foulants to a temperature of about 450°F (232°C).

8.     A process according to claim 7, characterised in that said heat recovery medium is saturated water with said water heated by said separated intermediated boiling point foulants and converting said water to steam.

9.     A process according to claim 8, characterised in that said saturated water is of a temperature of about 366°F (186°C).